# EUROPÄISCHE PATENTSCHRIFT

(11) **EP 1 225 974 B1**
(45) Veröffentlichungstag und Bekanntmachung des Hinweises auf die Patenterteilung: **16.08.2006**
(21) Anmeldenummer: 00972859.3
(22) Anmeldetag: 25.10.2000
(51) Int. Cl.: B01J 2/18, A61K 9/16

(54) **VERFAHREN ZUR HERSTELLUNG VON FETTSTOFFGRANULATEN**
METHOD FOR THE PRODUCTION OF FATTY GRANULES
PROCEDE POUR LA PRODUCTION DE GRANULES DE CORPS GRAS

(30) Priorität: 03.11.1999 DE 19952790
(43) Veröffentlichungstag der Anmeldung: 31.07.2002
(73) Patentinhaber: Cognis IP Management GmbH, 40589 Düsseldorf (DE)
(72) Erfinder: LEENERS, Bernhard, 41812 Erkelenz (DE); JANSEN, Bernd-Werner, 42329 Wuppertal (DE); PLACHENKA, Jürgen, 40822 Mettmann (DE); STEINBERNER, Udo, 40724 Hilden (DE)
(86) Internationale Anmeldenummer: PCT/EP2000/010479
(87) Internationale Veröffentlichungsnummer: WO 2001/032300

(56) Entgegenhaltungen:
- EP-A- 0 376 852
- EP-A- 0 737 509
- DE-A- 2 725 924
- DE-A- 4 338 212
- US-A- 5 380 532

## Beschreibung

### Gebiet der Erfindung

Die Erfindung befindet sich auf dem Gebiet der oleochemischen Grundstoffe und betrifft ein neues Sprühkristallisationsverfahren zur Herstellung granularer Fettstoffe mit eingeschränktem Korngrößenspektrum.

### Stand der Technik

Oleochemische Grundstoffe, wie beispielsweise Triglyceride, Fettsäuren oder Fettsäurederivate werden üblicherweise in fester Form konfektioniert, indem man die Rohstoffe aufschmilzt und die Schmelze dann in einem Turm über Düsen versprüht, wobei man den sich bildenden Tropfen Kaltluft entgegenleitet. Die Fettstoffe kristallisieren in ihrem freien Fall im Gegenstrom der Kaltluft und werden üblicherweise am Konus-Unterteil des Sprühturms als Fertigprodukt kontinuierlich abgezogen. Die erwärmte Kühlluft wird zur Äbscheidung der mitgerissenen Feinpartikel über Zyklone geleitet. Ein Ventilator fördert den Hauptvolumenstrom im Kreis über den Kühler zurück in den Sprühturm. Ein Teilstrom wird dabei in der Regel über das Abluftsystem zum Kesselhaus geleitet, während der erforderliche Frischluftstrom aus der Umgebung angesaugt wird. Die Kühler selbst werden mit Sole betrieben, wobei die aufgenommene Wärme über eine Kältemaschine abgeführt wird.

Üblicherweise sind im Kopf der Sprühtürme mehrere Einstoff-Druckdüsen, sogenannte Vollkegeldüsen installiert, über die das Produkt in den Sprühturm zerstäubt wird. Dabei reißt der mit hoher Turbulenz aus der Düse austretende Strahl schon nach kurzer Entfernung von der Düsenmündung auf und bildet Tropfen, wobei das Aufreißen durch den Drall des Strahls noch zusätzlich verstärkt wird. Das auf diese Art und Weise hergestellte Pulver zeigt ein breites Korngrößenspektrum auf. Aufgrund des hierbei anfallenden Feinstaubanteils und der Gefahr einer Staubexplosion, unterliegen derartige Sprühanlägen den erweiterten Pflichten eines Störfallbetriebes, was nicht unerhebliche Anforderungen an die Arbeitssicherung beinhaltet und zu einer ökonomischen Belastung des Herstellverfahrens führt.

Bei den Herstellern von oleochemischen Rohstoffen besteht daher ein lebhaftes Interesse an einem Verfahren, welches die Herstellung von granularen Fettstoffen mit einem eingeengten Komgrößenspektrum, insbesondere mit einem vernachlässigbarem Feinstkom- bzw. Staubanteil (< 0,5 mm) von unter 1 Gew.-%. Versuche der Anmelderin, diese Forderung durch Variation von Druck, Düsendurchmesser und Temperatur zu erreichen, haben sich als erfolglos erwiesen.

In der DE-A-2725924 wird ein Vertropfungsverfahren beschrieben, bei dem man jedoch z.B. pharmazeutische Wirkstoffe zuerst in einer Matrix aus Fettalkohol dispergieren muß um diese dann zu granulieren. Es entstehen so kugelförmige Teilchen mit einem Durchmesser zwischen 50 und 2500 µm, die jedoch sehr geringe Durchsatzmengen von 100 bis 1000 g/h aufweisen (Seite 11, 3. Absatz). Das Vertropfen von Fettsäuren bzw. Fettsäureestern ist nicht beschrieben.

Die Aufgabe der vorliegenden Erfindung hat daher darin bestanden, ein neues Verfahren zur Herstellung von granularen Fettstoffen zur Verfügung zu stellen, welches frei von den geschilderten Nachteilen ist.

### Beschreibung der Erfindung

Gegenstand der vorliegenden Erfindung ist ein Verfahren zur Herstellung von Fettstoffgranulaten mit einem Anteil von Fienstkorn-bzw. Staubanteilen mit eier Partikelgröße <0,5 mm von <1 Gew.%, bei dem man einen Strom eines flüssigen Fettstoffs, ausgewählt aus der Gruppe der Fettsäuren und/oder Fettsäureester mit Hilfe einer Gießerplatte durch Vibration vertropft und den Tropfen Kaltluft entgegenleitet, welches diese kristallisiert.

Überraschenderweise wurde gefunden, daß das gesteckte Ziel durch eine geänderte Tropfenerzeugung zu erreichen ist. Hierbei werden die Fettstoffe in flüssiger Phase, beispielsweise als Schmelze, über einen vibrierenden Lochteller in den Sprühturm eingebracht. Infolge der auf die Flüssigkeit wirkenden Vibration wird der Flüssigkeit eine Frequenz aufgeprägt, der Fiüssigkeitsfaden immer wieder unterbrochen und es bilden sich aufgrund der Grenzflächenspannung Kügelchen, die anschließend in den eigentlichen Sprühturm gelangen und dann während des freien Falls beispielsweise durch einen Kaltluftgegenstrom zur Kristallisation gebracht werden. In Abhängigkeit von Lochdurchmesser und Schwingfrequenz kann ein definiertes Komspektrum ohne Staubanteil eingestellt werden. Eine derartige Anlage unterliegt damit nicht mehr den erweiterten Pflichten eines Störfallbetriebes, was zu einer drastischen Verminderung des technischen Aufwandes und der damit verbundenen Kosten führt.

### Fettstoffe

Unter dem Begriff Fettstoffe werden im Sinne der vorliegenden Erfindung Fettsäuren und Fettsäureester sowie deren Mischungen verstanden, mit der Maßgabe, daß diese bei Raumtemperatur in fester Form vorliegen oder genauer, daß diese einen Erweichungspunkt oberhalb von 20 °C, vorzugsweise oberhalb von 25 °C und insbesondere oberhalb von 30 °C aufweisen.

Fettstoffe, die im Sinne des erfindungsgemäßen Verfahrens granuliert werden, stellen die Fettsäuren dar, welche vorzugsweise Formel (1) folgen,

**R**^{**1**}**CO-OH** **(I)**

in der R¹CO für einen aliphatischen, vorzugsweise gesättigten Acylrest mit 12 bis 22 Kohlenstoffatomen steht. Typische Beispiele sind Laurinsäure, Myristinsäure, Palmitinsäure, Stearinsäure und Behensäure sowie deren technische Mischungen. Bevorzugt sind gesättigte technische Fettsäuren mit 12 bis 18 Kohlenstoffatomen wie beispielsweise Kokos-, Palm-, Palmkem- oder Talgfettsäure sowie deren Härtungsprodukte. Verzweigte und/oder ungesättigte Fettsäuren, wie beispielsweise Isostearinsäure, Ölsäure oder Erucasäure, können zugegen sein, sofern dies nicht dazu führt, daß der Erweichungspunkt der Fettsäuremischung unter 20 °C absinkt.

Als Fettstoffen, die im Sinne der Erfindung einer verbesserten Sprühkristallisation unterworfen werden, kommen Fettsäureester in Frage, bei denen es sich um Fettsäurealkyl-ester oder Fettsäurepolyolester handeln kann; die Bedingungen zum Erstarrungspunkt gelten hier selbstverständlich analog. Fettsäurealkylester, die als Fettstoffe in Frage kommen, folgen vorzugsweise der Formel (II),

**R**^{**2**}**CO-OR**^{**3**} **(II)**

in der R²CO für einen aliphatischen, vorzugsweise gesättigten Acylrest mit 12 bis 22 Kohlenstoffatomen und R³ für einen linearen oder verzweigten Alkylrest mit 1 bis 22 Kohlenstoffatomen steht. Typische Beispiele sind die Ester von Laurinsäure, Myristinsäure, Palmitinsäure, Stearinsäure, Arachinsäure, Gadoleinsäure, Behensäure und Erucasäure sowie deren technische Mischungen mit Methanol, Ethanol, Propanol, Butanol, Pentanol, Capronalkohol, Caprylalkohol, 2-Ethylhexylalkohol, Caprinalkohol, Laurylalkohol, Isotridecylalkohol, Myristylalkohol, Cetylalkohol, Palmoleylalkohol, Stearylalkohol, Isostearylalkohol, Oleylalkohol, Elaidylalkohol, Petroselinylalkohol, Linolylalkohol, Linolenylalkohol, Elaeostearylalkohol, Arachylalkohol, Gadoleylalkohol, Behenylalkohol, Erucylalkohol und Brassidylalkohol. Insbesondere sind für diesen Zweck Wachsester geeignet, also Ester langkettiger Fettsäuren mit langkettigen Fettalkoholen, die über insgesamt mehr als 20 Kohlenstoffatomen verfügen und insbesondere in der Kosmetik Anwendung finden. Neben den Alkylestern kommen auch Polyolester in Betracht, bei denen die Fettsäurekomponente mit der der Alkylester übereinstimmt. Die Polyole hingegen besitzen vorzugsweise 2 bis 15 Kohlenstoffatome und mindestens zwei Hydroxylgruppen. Typische Beispiele sind
➢ Alkylenglycole, wie beispielsweise Ethylenglycol, Diethylenglycol, Propylenglycol, Butylenglycol, Hexylenglycol sowie Polyethylenglycole mit einem durchschnittlichen Molekulargewicht von 100 bis 1.000 Dalton;
➢ technische Oligoglyceringemische mit einem Eigenkondensationsgrad von 1,5 bis 10, wie etwa technische Diglyceringemische mit einem Diglyceringehalt von 40 bis 50 Gew.-%;
➢ Methyolverbindungen, wie insbesondere Trimethylolethan, Trimethylolpropan, Trimethylolbutan, Pentaerythrit und Dipentaerythrit;
➢ Niedrigalkylgucoside, insbesondere solche mit 1 bis 8 Kohlenstoffen im Alkylrest wie beispielsweise Methyl- und Butylglucosid,
➢ Zuckeralkohole mit 5 bis 12 Kohlenstoffatomen, wie beispielsweise Sorbit oder Mannit;
➢ Zucker mit 5 bis 12 Kohlenstoffatomen, wie beispielsweise Glucose oder Saccharose;
➢ Aminozucker, wie beispielsweise Glucamin.

### Vertropfungsanlage

Die im Sinne des erfindungsgemäßen Verfahrens durchgeführte Vertropfung mit Hilfe einer vibrierenden Gießerplatte ist bereits für die Verarbeitung von synthetischen Wachsen, Harzen sowie niedrigviskosen Polyestern bekannt. Entsprechende Bauteile werden beispielsweise von der Firma Rieter-Automatik unter Bezeichnung "Droppo Line" für den Einsatz in der Textiltechnik vertrieben. Im Sinne des erfindungsgemäßen Verfahrens sind solche Gießerplatten bevorzugt, welche als Lochscheiben geformt sind, durch deren Öffnungen die Tropfen dann in den Sprühturm tropfen können. Die Leistung solcher Lochscheiben kann vorzugsweise im Bereich von 100 bis 800 kg/h liegen und beträgt insbesondere etwa 500 kg/h, der Durchmesser der Bohrungen liegt zwischen 0,5 (Durchmesser der Granulate im Mittel 0,8 mm) und 1,4 mm (Durchmesser der Granulate im Mittel 2,5 mm). Die Schwingungsfrequenz der Lochscheiben ("Tropfteiter") liegt typischerweise im Bereich von 100 bis 1000 und vorzugsweise 500 bis 800 Hz. Ein weiterer Vorteil gegenüber den herkömmlichen Verfahren besteht ferner darin, daß mit nur geringem Überdruck (typisch : 10 bis 100 mbar) gearbeitet werden kann. Die Kühlung innerhalb des Sprühturms kann zwar grundsätzlich auch mit Wasser erfolgen, aus praktischen Gründen ist jedoch eine Kühlung mit kalter Luft im Gegenstrom empfehlenswert, wie dies im Stand der Technik hinreichend beschrieben wird. Die Granulate sind annähernd kugelförmig und weisen danach in Abhängigkeit der Öffnungen in der Lochplatte und der Frequenz durchschnittliche Durchmesser im Bereich von 1 bis 2,5 mm auf, Der Staubanteil, d.h. Partikel mit Teilchengrößen kleiner 0,5 mm ist dabei praktisch Null.

### Beispiele

**Vergleichsbeispiel V1.** In einem konventionellen Sprühturm wurde eine flüssige technische Stearinsäure (Edenor® St 1, Cognis Deutschland GmbH) bei einem Betriebsüberdruck von 9 bar über drei Vollkegeldüsen mit einem Durchmesser von 3,4 mm versprüht. Die Kristallisation erfolgte mit Kaltluft im Gegenstrom. Das Sprühgut wurde am Konus des Turms kontinuierlich abgezogen. 86,8 Gew.-% des Sprühgutes wies einen Durchmesser kleiner 0,5 mm auf, nur 13,2 Gew.% lagen oberhalb dieser Grenze. Der Schwerpunkt der Komgrößenverteilung lag bei 0,2 bis 0,3 mm (54,5 Gew.-%).

**Beispiel 1.** Beispiel V1 wurde wiederholt, die Stearinsäure jedoch über eine Gießerplatte ("Tropfteller") mit einem Durchmesser von 480 mm, Bohrungen von 0,5 mm, einer Schwingungsfrequenz von 800 Hz und einem Betriebsdruck von 40 mbar wiederholt. Der Anteil an Sprühgut mit einem Durchmesser kleiner 0,5 mm betrug nunmehr noch 0,4 Gew.-%, während 68,5 Gew.-% einen Durchmesser im Bereich von 0,8 bis 1,25 mm aufwiesen.

**Vergleichsbeispiel V2.** Beispiel V1 wurde wiederholt, jedoch die Versprühung von technischer Behensäure (Edenor® C 22 85 R, Cognis Deutschland GmbH) mit Hilfe von sechs Vollkegeldüsen mit einem Durchmesser von 3,4 mm bewerkstelligt und der Betriebsdruck auf 2,1 bar abgesenkt. Der Anteil an Sprühgut mit einem Teilchendurchmesser kleiner 0,5 mm betrug hierbei 55,8 Gew.-%.

**Beispiel 2.** Beispiel V2 wurde wiederholt, die Behensäure jedoch über eine Gießerplatte ("Tropfteller") mit einem Durchmesser von 480 mm, Bohrungen von 0,5 mm, einer Schwingungsfrequenz von 800 Hz und einem Betriebsdruck von 40 mbar wiederholt. Der Anteil an Sprühgut mit einem Durchmesser kleiner 0,5 mm betrug nunmehr noch 0,4 Gew.-%, während 70,5 Gew.-% einen Durchmesser im Bereich von 0,8 bis 1,25 mm aufwiesen.

## Patentansprüche

1. Verfahren zur Herstellung von Fettstoffgranulaten mit einem Anteil von Feinstkorn- bzw. Staubanteilen mir einer Partikelgröße < 0,5 mm von < 1 Gew.-%, bei dem man einen Strom eines flüssigen Feststoffs, ausgewählt aus der Gruppe der Fettsäuren und/oder Fettsäureester mit Hilfe einer Gießerplatte durch Vibration vertropft, wobei diese Gießerplatte eine Lochplatte darstellt, die Bohrungen von im Mittel 0,5 bis 1,4 mm aufweist und mit einer Frequenz von 100 bis 1000 Hz schwingt, und den Tropfen Kaltluft entgegenleitet, welches diese kristallisiert."

2. Verfahren nach Anspruch 1, wobei man Fettsäuren und/oder Fettsäureestern vertropft, die einen Erweichungspunkt oberhalb von 20 °C aufweisen.

3. Verfahren nach mindestens einem der Ansprüche 1 und/oder 2, wobei man als Fettstoffe Fettsäuren der Formel (I) einsetzt,
**R**^{**1**}**CO-OH** **(I)**
in der R¹CO für einen aliphatischen, linearen oder verzweigten, gesättigten Acylrest mit 12 bis 22 Kohlenstoffatomen steht.

4. Verfahren nach mindestens einem der Ansprüche 1 bis 3, wobei man als Fettstoffe Fettsäurealkylester der Formel (II) einsetzt,
**R**^{**2**}**CO-OR**^{**3**} **(II)**
in der R²CO für einen aliphatischen, vorzugsweise gesättigten Acylrest mit 12 bis 22 Kohlenstoffatomen und R³ für einen linearen oder verzweigten Alkylrest mit 1 bis 22 Kohlenstoffatomen steht.

## Claims

1. A process for the production of fatty compounds in granular form with a percentage content of fines or dust having a particle size of smaller than 0.5 mm of less than 1% by weight, in which a stream of a liquid fatty compound selected from the group of fatty acids and/or fatty acid esters is converted into droplets by a vibrating casting plate, the casting plate being a perforated plate with a mean perforation diameter of 0.5 to 1.4 mm which vibrates at a frequency of 100 to 1,000 Hz, and cold air is blown against the drops and crystallizes them.

2. A process as claimed in claim 1, **characterized in that** fatty acids and/or fatty acid esters with a softening point above 20°C are converted into droplets.

3. A process as claimed in claims 1 and/or 2, **characterized in that** fatty acids corresponding to formula (I):
**R**^{**1**}**CO-OH** **(I)**
in which R¹CO is an aliphatic, linear or branched, saturated acyl group containing 12 to 22 carbon atoms, are used as the fatty compounds.

4. A process as claimed in at least one of claims 1 to 3, **characterized in that** fatty acid alkyl esters corresponding to formula (II):
**R**^{**2**}**CO-OR**^{**3**} **(II)**
in which R²CO is an aliphatic, preferably saturated acyl group containing 12 to 22 carbon atoms and R³ is a linear or branched alkyl group containing 1 to 22 carbon atoms,
are used as the fatty compounds.

## Revendications

1. Procédé de fabrication de granulats de matières grasses comportant une fraction de < 1 % en poids, de grains très fins ou de poussières de granulométrie < 0,5 mm selon lequel on fait goutter par vibration un courant d'une matière solide fluide, choisie dans le groupe des acides gras et/ou des esters d'acides gras, à l'aide d'une plaque de coulée, cette plaque de coulée correspondant à une plaque perforée ayant des perçages, en moyenne de 0,5 à 1,4 mm, qui vibre à une fréquence de 100 à 1 000 Hz et qui apporte aux gouttes, de l'air froid qui les cristallise.

2. Procédé selon la revendication 1, selon lequel on fait goutter des acides gras et/ou des esters d'acides gras présentant un point de ramollissement supérieur à 20°C.

3. Procédé selon au moins l'une des revendications 1 et/ou 2, selon lequel on utilise, comme matières grasses, des acides gras de formule (I)
R¹CO-OH (I)
dans laquelle R¹CO représente un radical acyle aliphatique, saturé, linéaire ou ramifié, comportant 12 à 22 atomes de carbone.

4. Procédé selon au moins l'une des revendications 1 à 3, selon lequel on utilise, comme matières grasses, des esters alkyliques d'acides gras de formule (II)
R²CO-OR³ (II)
dans laquelle R²CO représente un radical acyle aliphatique de préférence saturé, comportant 12 à 22 atomes de carbone et R³ un radical alkyle linéaire ou ramifié comportant 1 à 22 atomes de carbone.
